# EUROPÄISCHE PATENTSCHRIFT

(11) **EP 1 943 134 B1**
(45) Veröffentlichungstag und Bekanntmachung des Hinweises auf die Patenterteilung: **27.03.2013**
(21) Anmeldenummer: 06793594.0
(22) Anmeldetag: 18.09.2006
(51) Int. Cl.: B60W 20/00, F02D 41/30, B60W 30/188, B60W 10/06, B60W 10/08

(54) **VERFAHREN ZUM BETREIBEN EINER VERBRENNUNGSKRAFTMASCHINE**
METHOD FOR OPERATING AN INTERNAL COMBUSTION ENGINE
PROCEDE DE COMMANDE D'UN MOTEUR A COMBUSTION INTERNE

(30) Priorität: 25.10.2005 DE 102005051002
(43) Veröffentlichungstag der Anmeldung: 16.07.2008
(73) Patentinhaber: ROBERT BOSCH GMBH, 70442 Stuttgart (DE)
(72) Erfinder: MANN, Karsten, 70469 Stuttgart (DE); HERNIER, Markus, 70839 Gerlingen (DE)
(86) Internationale Anmeldenummer: PCT/EP2006/066454
(87) Internationale Veröffentlichungsnummer: WO 2007/048661

(56) Entgegenhaltungen:
- EP-A2- 1 085 192
- WO-A-96/01193
- WO-A-2005/012022
- US-A- 5 343 970
- US-A1- 2004 149 255
- US-A1- 2006 042 587

## Beschreibung

### Stand der Technik

Die Erfindung geht aus von einem Verfahren zum Betreiben einer Verbrennungskraftmaschine nach dem Oberbegriff des Anspruchs 1.

Hybridfahrzeuge, bei denen Verbrennungskraftmaschinen und Elektromaschinen im Antriebsstrang zusammenwirken, sind bekannt. Es sind verschiedene Anordnungen bekannt, wie serielle Hybride, bei denen die Verbrennungskraftmaschine mechanisch nicht mit den Antriebsrädern verbunden ist, parallele Hybride, bei denen die Verbrennungskraftmaschine und die Elektromaschine (oder auch mehrere Elektromaschinen) mechanisch mit den Antriebsrädern verbunden sind, sowie Mischformen, z.B. leistungsverzweigte Hybride, bei denen die Verbrennungskraftmaschine mechanisch sowohl mit den Antriebsrädern verbunden ist als auch die Elektromaschine antreibt.

Die WO 2005/012022 offenbart ein Verfahren zum Betreiben eines Hybridfahrzeugs mit einem Dieselmotor, bei dem eine Elektromaschine den Dieselmotor unterstützt, wenn geschaltet wird und die Kupplung gelöst ist. Das Verfahren dient zur Verbesserung der Effizienz des Antriebs und zur Verminderung der Emission bei kleinen Drehzahlen des Dieselmotors.

Aus der US 5 343 970 A, das als nächtsliegender Stand der Technik angesehen wird, ist ein verbessertes Hybridfahrzeug bekannt, welches einen Verbrennungsmotor und eine elektrische. Maschine als Antriebsaggregate aufweist. In Abhängigkeit der aktuellen Fahrsituation wird das Drehmoment von je einem oder **von** beiden Antriebsaggregaten zusammen aufgebracht. Der Verbrennungsmotor ist dabei so ausgelegt, dass dieser bei Autobahnfahrt im Bereich seines geringsten Kraftstoffverbrauchs betrieben wird. Die elektrische Maschine wird bei hoher elektrischer Spannung und mit geringen elektrischen Strömen betrieben. Die Leistung der elektrischen Maschine entspricht mindestens der des Verbrennungsmotors.

Aus der EP 1 085 192 A2 ist eine Brennkraftmaschine bekannt, die mit unterschiedlichen Brennverfahren betrieben werden kann. Insbesondere kann mittels einem Steuersystem von einem Brennverfahren mit Zündkerzen-Zündung zu einem Brennverfahren mit automatischer Kompressions-Zündung, und umgekehrt gewechselt werden.

### Vorteile der Erfindung

Es wird ein erfindungsgemäßes Verfahren zum Betreiben einer Verbrennungskraftmaschine vorgeschlagen, bei dem wenigstens zeitweise in einem regulären Fahrbetrieb mit einer angeforderten Antriebsleistung wenigstens eine Elektromaschine zur Antriebsunterstützung zugeschaltet wird, und bei dem die Verbrennungskraftmaschine abhängig von einem gewählten Brennverfahren wahlweise stationär oder dynamisch betrieben wird. Es ist ein vorteilhaft emissionsarmer Betrieb der Verbrennungskraftmaschine möglich, wenn ein besonders emissionsarmes Brennverfahren gewählt werden kann, das zwar eine ungünstige Dynamik z.B. bei Motorlastwechsel aufweist, die Elektromaschine jedoch die dynamischen Leistungsanteile des Antriebs mit hoher Dynamik bereitstellen kann. Dies kann in Lastbereichen vorteilhaft sein, in denen unterschiedliche Brennverfahren unterschiedliche Mengen von Emissionen verursachen. Durch die Elektromaschine kann ein optimales Brennverfahren für den jeweiligen Lastbereich gewählt werden. Es kann eine Elektromaschine eingesetzt werden oder auch zwei oder mehrere Elektromaschinen. In anderen Lastbereichen kann das Brennverfahren der Verbrennungskraftmaschine geändert werden. Die Verbrennungskraftmaschine wird vorzugsweise mit Hilfe von zwei Elektromaschinen wahlweise im seriellen oder im parallelen oder im parallel-seriellen oder im leistungsverzweigtem Modus betrieben. Die Verbrennungskraftmaschine wird dabei je nach Leistungsbedarf mit einem günstigen Brennverfahren betrieben.
Erfindungsgemäß wird in einem Verfahrensschritt zum Einstellen einer erhöhten Leistung im stationären Betrieb der Verbrennungskraftmaschine diese kurzzeitig nicht befeuert und durch die Elektromaschine auf einen neuen Betriebspunkt geschleppt. Vorzugsweise wird während des Schleppens der Verbrennungskraftmaschine ein luftseitiger Ladungswechsel der Verbrennungsluft der Verbrennungskraftmaschine für den neuen Betriebspunkt optimiert. Bei einem Dieselmotor kann dieser auch im neuen Betriebspunkt mit für den HCCl-Betrieb bzw. (p)HCCl-Betrieb günstigen Parametern betrieben werden.

In einem günstigen Verfahrensschritt kann bei stationärem Betrieb der Verbrennungskraftmaschine ein dynamischer Leistungsanteil der angeforderten Antriebsleistung elektromotorisch bereitgestellt werden. Die Verbrennungskraftmaschine speist ihre Leistung in einen Energiespeicher ein, z.B. eine Batterie, aus dem die Elektromaschine ihre Antriebsenergie abhängig von einer benötigten Antriebsleistung und Dynamik entnimmt. Die Verbrennungskraftmaschine wird in einem günstigen Bereich mit optimierten Betriebsparametern für die Verminderung unerwünschter Emissionen, z.B. Russ und Stickoxide bei Dieselmotoren, betrieben.

In einem weiteren günstigen Verfahrensschritt bringt die Verbrennungskraftmaschine im dynamischen Betrieb wenigstens einen Teil des dynamischen Leistungsanteils auf. Auch hier kann das Erbringen der Leistungsanteile von Elektromaschine und verbrennungskraftmaschine hinsichtlich der Emissionen der Verbrennungskraftmaschine optimiert werden.

Vorzugsweise wird das Brennverfahren, mit dem die Verbrennungskraftmaschine betrieben wird, abhängig von Emissionen der Verbrennungskraftmaschine ausgewählt.

In einem weiteren günstigen Verfahrensschritt wird im stationären Betrieb eine für einen jeweiligen Motortakt benötigte gesamte Kraftstoffmenge direkt in einen Brennraum der Verbrennungskraftmaschine eingespritzt und danach gezündet. Mit besonderem Vorteil wird bei Dieselmotoren insbesondere im Teillastbereich eine sogenannte homogene Dieselverbrennung eingesetzt (HCCI = Homogeneous Charge Compression Ignition), die zu einer extrem russarmen und stickoxidarmen Verbrennung führt. Beim HCCI-Betriebsmodus wird der Dieselkraftstoff direkt in einen Brennraum des Dieselmotors eingespritzt und das im Brennraum entstehende Kraftstoff-Luft-Gemisch erst dann gezündet, wenn die für den betreffenden Motortakt benötigte gesamte Kraftstoffmenge in den jeweiligen Brennraum eingespritzt wurde. Eine Zwischenstufe stellt das bevorzugte so genannte (p)HCCI-Brennverfahren dar (Partly Homogeneous Charge Compression Ignition) bei dem nur sehr geringe Mengen des Kraftstoffs nach der Zündung in den Brennraum eingespritzt werden. Auch dabei entstehen geringere Emissionen wie beim konventionellen Brennverfahren. Beim HCCI-Brennverfahren wird davon ausgegangen, dass der Kraftstoff im Brennraum vor der Zündung homogenisiert wird, während beim (p)HCCI-Brennverfahren der Kraftstoff vor der Zündung teilweise eingespritzt und homogenisiert und teilweise erst nach der Zündung in den Brennraum eingespritzt wird. Zweckmäßigerweise werden beide Brennverfahren bei einer Motorapplikation in verschiedenen Betriebspunkten vorkommen. Bevorzugt sind die Übergänge zwischen den Brennverfahren dabei fließend, so dass die beiden Brennverfahren praktisch gleichgesetzt werden.

Im HCCI- bzw. (p)HCCI-Betriebsmodus wird die Verbrennungskraftmaschine vorzugsweise jeweils stationär oder quasistationär betrieben. Im quasistationären Betrieb führt die Verbrennungskraftmaschine nur langsame Betriebspunktwechsel durch. Der dynamische Leistungsanteil des Antriebs wird dabei von der Elektromaschine gestellt. Bei einem konventionellen Brennverfahren des Dieselmotors wird im dynamischen Betrieb Kraftstoff in den Brennraum auch nach eingesetzter Zündung eingespritzt. Dieses Brennverfahren kann in anderen Lastbereichen eingesetzt werden.

In einem anderen günstigen Verfahrensschritt wird die zum Einstellen einer erhöhten Leistung die Verbrennungskraftmaschine quasistationär betrieben. Dabei werden nur hochdynamische Fahranteile von der Elektromaschine im HCCI- oder (p)HCCI-Betriebsmodus kompensiert. Vorzugsweise wird der stationäre oder quasistationäre Betrieb der Verbrennungskraftmaschine in einem Teillastbereich der Verbrennungskraftmaschine eingestellt, während der dynamische Betrieb der Verbrennungskraftmaschine in einem Hochlastbereich und/oder Volllastbereich und/oder bei hohen Drehzahlen der Verbrennungskraftmaschine eingestellt wird.

Bei einem erfindungsgemäßen Hybridfahrzeug mit wenigstens einer Verbrennungskraftmaschine, wobei wenigstens zeitweise in einem regulären Fahrbetrieb mit einer angeforderten Antriebsleistung wenigstens eine Elektromaschine zur Antriebsunterstützung zuschaltbar ist, wird der dynamische Betrieb der Verbrennungskraftmaschine in einem Hochlastbereich und/oder Volllastbereich und/oder bei hohen Drehzahlen der Verbrennungskraftmaschine eingestellt.
Erfindungsgemäß wird in einem Verfahrensschritt zum Einstellen einer erhöhten Leistung im stationären Betrieb der Verbrennungskraftmaschine diese kurzzeitig nicht befeuert und durch die Elektromaschine auf einen neuen Betriebspunkt geschleppt. Vorzugsweise wird während des Schleppens der Verbrennungskraftmaschine ein luftseitiger Ladungswechsel der Verbrennungsluft der Verbrennungskraftmaschine für den neuen Betriebspunkt optimiert. Bei einem Dieselmotor kann dieser auch im neuen Betriebspunkt mit für den HCCI-Betrieb bzw. (p)HCCI-Betrieb günstigen Parametern betrieben werden.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand eines von einer Zeichnung dargestellten Ausführungsbeispiels der Erfindung.

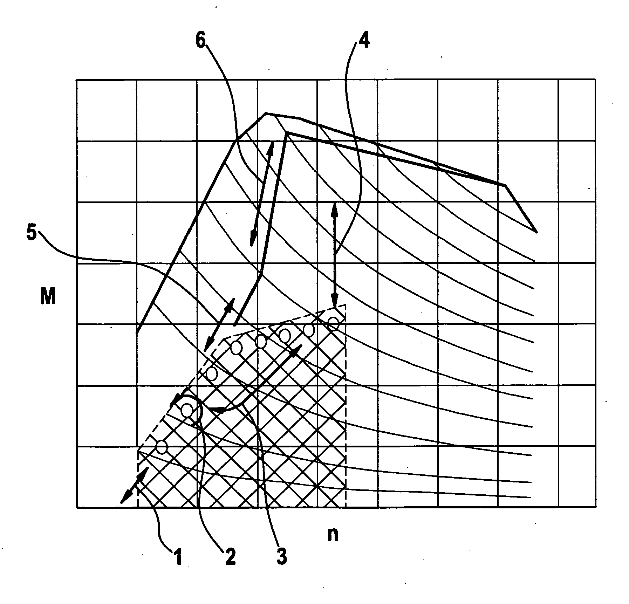

Im Folgenden zeigt die Figur ein Kennlinienfeld einer Verbrennungskraftmaschine mit Drehmoment über der Drehzahl der Verbrennungskraftmaschine für den Fall eines Dieselmotors.

### Beschreibung des Ausführungsbeispiels

Die Figur zeigt ein Kennlinienfeld mit Drehmomentverläufen M einer Verbrennungskraftmaschine über deren Drehzahl n anhand eines Dieselmotors eines bevorzugten Hybridfahrzeugs, dessen Gesamtantriebsstrang so aufgebaut und betrieben wird, dass die Verbrennungskraftmaschine möglichst minimale Emissionen wie CO₂, Stickoxide und Russ ausstößt.

Vorzugsweise wird der Dieselmotor mit Hilfe von zwei Elektromaschinen wahlweise im seriellen oder im parallelen oder im parallel-seriellen oder im leistungsverzweigten Modus betrieben. Dazu ist ein an sich bekannter Aufbau mit einem parallelen Hybrid mit zwei Elektromaschinen und mit einer Überbrückungskupplung günstig.

Der Dieselmotor wird dabei je nach Leistungsbedarf entweder im HCCI-Betriebsmodus bzw. (p)HCCI-Betriebsmodus oder im konventionellen Modus betrieben. Gleichzeitig stellt wenigstens eine Elektromaschine mit hoher Dynamik Antriebsenergie zum Boosten des Fahrzeugs zur Verfügung. Beim (p)HCCI-Betriebsmodus entspricht der Antrieb dem eines parallelen Hybridantriebs.

Beim (p)HCCI-Verfahren wird der Dieselkraftstoff direkt in einen Brennraum des Dieselmotors eingespritzt und das im Brennraum entstehende Kraftstoff-Luft-Gemisch erst dann gezündet, wenn praktisch die gesamte für den betreffenden Motortakt benötigte Kraftstoffmenge in den jeweiligen Brennraum eingespritzt wurde. Eine nur geringe Kraftstoffmenge wird noch nach der Zündung eingespritzt.

Der schraffierte Bereich soll den Bereich andeuten, in dem der Dieselmotor im stationären Betrieb im HCCI-Betriebsmodus läuft und der Antriebsstrang mit elektromotorischer Unterstützung eine verbesserte Dynamik erhält. Da das HCCI-Brennverfahren verbrennungsluftseitig geführt wird, ist die Dynamik hinsichtlich der Verbrennung des Kraftstoffs, insbesondere bei Motorlastwechsel, eingeschränkt. Darüber hinaus ist die spezielle Gemischbildung besonders im Teillastbereich mit ausreichender Zuverlässigkeit herzustellen.

Im Hochlast-, Volllastbereich und/oder bei hohen Drehzahlen wird der Dieselmotor mit einem konventionellen Brennverfahren betrieben, wobei nach dem Beginn der Verbrennung des Kraftstoffs im Brennraum noch Kraftstoff eingespritzt wird.

Weiterhin lässt sich ein schneller Übergang zwischen dem Betriebsmodus mit dem (p)HCCI-Brennverfahren und dem konventionellen Brennverfahren erreichen, indem der Dieselmotor durch die Elektromaschine auf einen entsprechenden Betriebspunkt geschleppt wird.

Bevorzugt wird bei einem PKW eine Elektromaschine mit 20 bis 50 kW eingesetzt.

Bereich 1 in der Figur gibt an, dass durch den parallelen Hybridantrieb im quasistationären (p)HCCI-Betriebsmodus des Dieselmotors bei geringen Abgastemperaturen, bedingt durch ein geringes Drehmoment bei geringer Drehzahl des Dieselmotors, HC- und CO-Emissionen vermieden werden können. Bereich 2 gibt an, dass die Dynamik durch Einsatz der Elektromaschine im HCCI-Betriebsmodus des Dieselmotors verbessert werden kann. Bereich 3 in der Figur gibt an, dass der Betriebspunkt des Dieselmotors im HCCI-Betriebsmodus durch die Elektromaschine, indem sie den Dieselmotor schleppt, bzw. in welchem beim (p)HCCI-Betriebsmodus die Verbrennungskraftmaschine langsame Betriebspunktwechsel durchführt, umgeschaltet werden kann. Bereich 4 gibt an, wie die Elektromaschine die Leistungsabgabe des Antriebstrangs verbessern kann, während der Dieselmotor im emissionsgünstigen (p)HCCI-Betriebsmodus läuft. Bereich 5 gibt an, wie der Übergang zwischen dem Betrieb mit (p)HCCI-Brennverfahren und konventionellem Brennverfahren verbessert wird. Dabei kann durch den (p)HCCI-Betriebsmodus jeweils ein Betrieb des Dieselmotors mit geringsten Emissionen erreicht werden.

Im Bereich 6 wird sich der Dieselmotor mit einem konventionellen Brennverfahren betrieben, wobei die Elektromaschine den Dieselmotor so unterstützt, dass dieser mit optimierten Parametern laufen kann. Vorteilhaft ergibt sich hier, dass der Energiespeicher klein, da nur Boost-Funktionen elektromotorisch unterstützt werden. Eine Batterie kann mit 0,5 - 1 kWh für die Elektromaschine mit 20 - 50 kW ausreichend sein.

## Patentansprüche

1. Verfahren zum Betreiben einer Verbrennungskraftmaschine, wobei wenigstens zeitweise in einem regulären Fahrbetrieb mit einer angeforderten Antriebsleistung wenigstens eine Elektromaschine zur Antiebsunterstützung zugeschaltet wird, wobei die Verbrennungskraftmaschine abhängig von einem gewählten Brennverfahren wahlweise stationär, quasistationär oder dynamisch betrieben wird **dadurch gekennzeichnet, dass**
zum Einstellen einer erhöhten Leistung im stationären Betrieb die Verbrennungskraftmaschine kurzzeitig nicht befeuert und durch die Elektromaschine auf einen neuen Betriebspunkt geschleppt wird.

2. Verfahren nach Anspruch 1, **dadurch gekennzeichnet, dass** bei stationärem Betrieb der Verbrennungskraftmaschine ein dynamischer Leistungsanteil der angeforderten Antriebsleistung elektromotorisch bereitgestellt wird.

3. Verfahren nach Anspruch 1 oder 2, **dadurch gekennzeichnet, dass** die Verbrennungskraftmaschine im dynamischen Betrieb wenigstens einen Teil eines dynamischen Leistungsanteils aufbringt.

4. Verfahren nach einem der vorhergehenden Ansprüche, **dadurch gekennzeichnet, dass** das Brennverfahren abhängig von Emissionen der Verbrennungskraftmaschine ausgewählt wird.

5. Verfahren nach einem der vorhergehenden Ansprüche, **dadurch gekennzeichnet, dass** im stationären Betrieb eine für einen jeweiligen Motortakt benötigte gesamte Kraftstoffmenge direkt in einen Brennraum der Verbrennungskraftmaschine eingespritzt und danach gezündet wird.

6. Verfahren nach Anspruch 5, **dadurch gekennzeichnet, dass** im dynamischen Betrieb Kraftstoff in den Brennraum auch nach eingesetzter Zündung eingespritzt wird.

7. Verfahren nach einem der vorhergehenden Ansprüche, **dadurch gekennzeichnet, dass** während des Schleppens der Verbrennungskraftmaschine ein luftseitiger Ladungswechsel der Verbrennungsluft der Verbrennungskraftmaschine für den neuen Betriebspunkt optimiert wird.

8. Verfahren nach einem der vorhergehenden Ansprüche, **dadurch gekennzeichnet, dass** der stationäre Betrieb der Verbrennungskraftmaschine in einem Teillastbereich der Verbrennungskraftmaschine eingestellt wird.

9. Verfahren nach einem der vorhergehenden Ansprüche, **dadurch gekennzeichnet, dass** der dynamische Betrieb der Verbrennungskraftmaschine in einem Hochlastbereich und/oder Volllastbereich und/oder bei hohen Drehzahlen der Verbrennungskraftmaschine eingestellt wird.

10. Hybridfahrzeug mit wenigstens einer Verbrennungskraftmaschine, wobei wenigstens zeitweise in einem regulären Fahrbetrieb mit einer angeforderten Antriebsleistung wenigstens eine Elektromaschine zur Antriebsunterstützung zuschaltbar ist, wobei der dynamische Betrieb der Verbrennungskraftmaschine in einem Hochlastbereich und/oder Volllastbereich und/oder bei hohen Drehzahlen der Verbrennungskraftmaschine eingestellt wird **dadurch gekennzeichnet, dass** zum Einstellen einer erhöhten Leistung im stationären Betrieb die Verbrennungskraftmaschine kurzzeitig nicht befeuert und durch die Elektromaschine auf einen neuen Betriebspunkt geschleppt wird.

## Claims

1. Method for operating an internal combustion engine, wherein at least intermittently during regular driving operation with a demanded drive power, at least one electric machine is activated in order to provide drive assistance, wherein the internal combustion engine is operated selectively under steady-state, quasi-steady-state or dynamic conditions as a function of a selected combustion process, **characterized in that**,
to set an increased power during steady-state operation, the internal combustion engine is briefly not fired and is driven along by the electric machine to a new operating point.

2. Method according to Claim 1, **characterized in that**, during steady-state operation of the internal combustion engine, a dynamic power component of the demanded drive power is provided by electric motor.

3. Method according to Claim 1 or 2, **characterized in that** the internal combustion engine, during dynamic operation, imparts at least a part of a dynamic power component.

4. Method according to one of the preceding claims, **characterized in that** the combustion process is selected as a function of emissions of the internal combustion engine.

5. Method according to one of the preceding claims, **characterized in that**, during steady-state operation, a total amount of fuel required for a respective engine stroke is injected directly into a combustion chamber of the internal combustion engine and subsequently ignited.

6. Method according to Claim 5, **characterized in that**, during dynamic operation, fuel is injected into the combustion chamber also after ignition has commenced.

7. Method according to one of the preceding claims, **characterized in that**, while the internal combustion engine is being driven along, an air-side charge exchange of the combustion air of the internal combustion engine is optimized for the new operating point.

8. Method according to one of the preceding claims, **characterized in that** the steady-state operation of the internal combustion engine is set in a part-load range of the internal combustion engine.

9. Method according to one of the preceding claims, **characterized in that** the dynamic operation of the internal combustion engine is set in a high-load range and/or full-load range and/or at high rotational speeds of the internal combustion engine.

10. Hybrid vehicle having at least one internal combustion engine, wherein at least intermittently during regular driving operation with a demanded drive power, at least one electric machine can be activated in order to provide drive assistance, wherein the dynamic operation of the internal combustion engine is set in a high-load range and/or full-load range and/or at high rotational speeds of the internal combustion engine, **characterized in that**, to set an increased power during steady-state operation, the internal combustion engine is briefly not fired and is driven along by the electric machine to a new operating point.

## Revendications

1. Procédé pour faire fonctionner un moteur à combustion interne, au moins une machine électrique étant mise en circuit pour l'assistance à l'entraînement au moins par intermittence au cours d'un déplacement normal avec une puissance d'entraînement demandée, le moteur à combustion interne, suivant un mode de combustion sélectionné, fonctionnant au choix en mode stationnaire, quasi-stationnaire ou dynamique, **caractérisé en ce que** pour régler une puissance accrue en mode de fonctionnement stationnaire, le moteur à combustion interne n'est pas mis à feu pendant une courte durée et est tracté par la machine électrique jusqu'à un nouveau point de fonctionnement.

2. Procédé selon la revendication 1, **caractérisé en ce que** lors du fonctionnement stationnaire, une part de puissance dynamique de la puissance d'entraînement requise est mise à la disposition du moteur à combustion interne sous forme électromotorisée.

3. Procédé selon la revendication 1 ou 2, **caractérisé en ce que** le moteur à combustion interne en fonctionnement dynamique applique au moins une partie d'une part de puissance dynamique.

4. Procédé selon l'une des revendications précédentes, **caractérisé en ce que** le mode de combustion est sélectionné en fonction des émissions du moteur à combustion interne.

5. Procédé selon l'une des revendications précédentes, **caractérisé en ce qu'**en fonctionnement stationnaire, une quantité totale de carburant nécessaire pendant un cycle du moteur correspondant est injectée directement dans une chambre de combustion du moteur à combustion interne et ensuite allumée.

6. Procédé selon la revendication 5, **caractérisé en ce qu'**en fonctionnement dynamique, le carburant est également injecté dans la chambre de combustion après l'amorçage de l'allumage.

7. Procédé selon l'une des revendications précédentes, **caractérisé en ce que** pendant la traction du moteur à combustion interne, un mouvement de gaz de l'air de combustion du moteur à combustion interne est optimisé côté air pour le nouveau point de fonctionnement.

8. Procédé selon l'une des revendications précédentes, **caractérisé en ce que** le fonctionnement stationnaire du moteur à combustion interne est réglé dans une plage de charge partielle du moteur à combustion interne.

9. Procédé selon l'une des revendications précédentes, **caractérisé en ce que** le fonctionnement dynamique du moteur à combustion interne est réglé dans une plage de forte charge et/ou une plage de pleine charge et/ou aux vitesses de rotation élevées du moteur à combustion interne.

10. Véhicule hybride comprenant au moins un moteur à combustion interne, au moins une machine électrique pouvant être mise en circuit pour l'assistance à l'entraînement au moins par intermittence au cours d'un déplacement normal avec une puissance d'entraînement demandée, le fonctionnement dynamique du moteur à combustion interne étant réglé dans une plage de forte charge et/ou une plage de pleine charge et/ou aux vitesses de rotation élevées du moteur à combustion interne, **caractérisé en ce que** pour régler une puissance accrue en mode de fonctionnement stationnaire, le moteur à combustion interne n'est pas mis à feu pendant une courte durée et est tracté par la machine électrique jusqu'à un nouveau point de fonctionnement.
